# FASCICULE DE BREVET EUROPEEN

(11) **EP 1 145 820 B1**
(45) Date de publication et mention de la délivrance du brevet: **21.10.2015**
(21) Numéro de dépôt: 01400849.4
(22) Date de dépôt: 03.04.2001
(51) Int. Cl.: B29C 49/20, B29C 51/12, B29C 41/20, B60K 15/03

(54) **Procédé de fabrication d'un réservoir en matière thermoplastique comportant un relief pour la fixation d'un élément rapporté et un système comprenant un réservoir à carburant ainsi fabriqué et un élément rapporté**
Verfahren zum Herstellen eines Tanks aus Kunstoffmaterial der eine Befestigunseinrichung aufweist zum Arretieren eines Anbauteils und System bestehend aus durch das Verfahren hergestelltem Benzientank und Anbauteil
Method for producing a tank of thermoplastic material which has an attachment means for fixing an element to it and system comprising a fuel tank produced by this method and an element to be fixed

(30) Priorité: 03.04.2000 FR 0004219
(43) Date de publication de la demande: 17.10.2001
(73) Titulaire: Inergy Automotive Systems Research (Société Anonyme), 1120 Bruxelles (BE)
(72) Inventeur: Gombert, Patrice, 60200 Compiegne (FR); Rosseel, Alexis, 60200 Compiegne (FR)
(74) Mandataire: de la Bigne, Guillaume Michel Marie

(56) Documents cités:
- DE-A- 4 205 332
- DE-A- 4 221 766
- FR-A- 2 109 489
- US-A- 5 308 427

## Description

La présente invention concerne un procédé pour réaliser un réservoir en matière thermoplastique soufflée, thermoformée ou rotomoulée.

L'invention concerne plus particulièrement, mais non exclusivement, la réalisation d'un réservoir à carburant de véhicule automobile.

Un réservoir à carburant doit être conçu pour empêcher les pertes de carburant au travers de sa paroi, notamment par diffusion à travers la matière thermoplastique.

Pour ce faire, il est connu de réaliser le réservoir à partir d'une paraison multicouche comprenant une couche formant barrière constituée d'un matériau présentant une bonne imperméabilité aux hydrocarbures gazeux et liquides.

Une telle couche peut être à base d'EVOH par exemple.

Le réservoir ainsi constitué donne généralement satisfaction au regard des émissions d'hydrocarbures.

Il existe par ailleurs un besoin pour fixer sur le réservoir des éléments tels que par exemple une pompe à carburant, un clapet ou un conduit, sans pour autant endommager la ou les couches formant barrière et compromettre l'imperméabilité du réservoir aux hydrocarbures.

Le brevet US 5 308 427 décrit un procédé pour fixer un élément rapporté à l'intérieur d'un réservoir à carburant. Dans ce procédé, on réalise un relief de fixation sur la paroi du réservoir au moyen d'un insert, la paraison venant enrober celui-ci lors de son soufflage. L'élément rapporté comporte un orifice dans lequel le relief est introduit. Ce dernier fait alors saillie à l'intérieur de l'élément rapporté et diminue la hauteur utile disponible pour réaliser la fonction pour laquelle l'élément rapporté, notamment un clapet, est prévu, ce qui est susceptible de réduire la hauteur de carburant maximale dans le réservoir et la capacité de ce dernier.

Le document US-5 308 427 décrit un procédé pour réaliser un réservoir en matière thermoplastique. Il est décrit de placer dans une enceinte de soufflage au moins un insert pour réaliser un relief du côté intérieur du réservoir, ce relief permettant la fixation d'un élément rapporté dans le réservoir.

Il existe un besoin pour fixer un élément rapporté, notamment un clapet, sur , . la surface intérieure d'un réservoir au plus près de celle-ci, afin par exemple de pouvoir accroître la hauteur de carburant dans le réservoir.

L'invention vise à répondre à tout ou partie des besoins précités.

Elle y parvient grâce à un procédé pour réaliser un réservoir en matière thermoplastique soufflée, thermoformée ou rotomoulée, caractérisé par le fait qu'il comprend les étapes suivantes :
- réaliser un relief du côté intérieur du réservoir, ce relief permettant la fixation d'un élément rapporté dans le réservoir et définissant un logement permettant de recevoir au moins une partie dudit élément, le relief étant réalisé
   soit par la mise en oeuvre des étapes suivantes :
   a) placer dans une enceinte au moins un insert,
   b) introduire la matière destinée à former la paroi du réservoir dans l'enceinte,
   c) former la paroi du réservoir par soufflage, thermoformage ou rotomoulage, l'insert étant positionné dans l'enceinte de telle sorte que lors de sa formation, la paroi enrobe au moins partiellement l'insert, ce dernier présentant en outre une forme choisie de manière à ce que cette paroi, en prenant au moins partiellement la forme de l'insert, constitue ledit relief,
   d) fixer à l'intérieur du réservoir l'élément rapporté (24 ; 55) en recevant au moins en partie, dans le logement
      et que l'insert (5 ; 10 ; 20) est réalisé dans un matériau ayant une température de fusion supérieure à celle du ou des matériaux constituant la paroi (1).

L'invention permet de réaliser une forme pour la fixation d'un élément rapporté à l'intérieur du réservoir sans avoir à découper ou à percer la paroi de celui-ci, ce qui est particulièrement avantageux lorsque la paroi en question comporte une ou plusieurs couches formant barrière vis-à-vis des hydrocarbures.

On obtient ainsi, d'une manière simple et fiable, un moyen de fixation d'un élément rapporté à l'intérieur du réservoir, sans que la présence d'un tel moyen de fixation ne diminue l'étanchéité du réservoir aux hydrocarbures.

Le fait que la relief définisse un logement permet de fixer l'élément rapporté, notamment un clapet, en l'engageant à l'intérieur du logement, sans perte de hauteur utile pour réaliser la fonction pour laquelle l'élément rapporté est prévu, donc sans diminuer le niveau maximum de carburant dans le réservoir.

L'élément rapporté peut être autre qu'un clapet, et notamment être constitué par un tuyau, un filtre, une pompe, une jauge à carburant ou un organe de maintien quelconque.

Le relief peut être réalisé sur la paroi supérieure du réservoir.

Dans le cas où l'on réalise le relief en rapportant un organe de fixation sur la paroi du réservoir, on peut disposer d'une plus grande liberté de choix de l'emplacement où sera fixé l'organe de fixation par rapport au cas où l'on surmoule un insert.

Lorsque le logement présente un fond, l'élément rapporté peut venir au contact avec ce fond, après sa fixation.

Dans une réalisation particulière, le logement est défini à l'intérieur d'une paroi annulaire qui peut être interrompue ou continue.

En variante, le relief peut présenter une forme de double plot, le logement étant défini entre les plots.

Dans une réalisation particulière, l'élément rapporté est mis en place dans le logement suivant la direction axiale de celui-ci, qui peut être verticale.

Le relief peut présenter une forme choisie pour permettre une fixation par encliquetage de l'élément rapporté sur la paroi du réservoir.

En variante, le relief peut présenter une forme choisie pour permettre une retenue par friction de l'élément rapporté sur la paroi du réservoir.

Dans les deux cas, le relief assure une mise en place aisée de l'élément rapporté.

Dans le cas où l'on réalise le relief en mettant en oeuvre les étapes a) à c), la paroi du réservoir est avantageusement réalisée par soufflage d'une paraison placée dans l'enceinte.

Dans la mise en oeuvre des étapes a) à c), l'étape a) peut précéder l'étape b) ou inversement.

La forme de l'insert peut être choisie de manière à constituer une armature au sein de la paroi du réservoir, limitant les variations dimensionnelles de cette dernière.

Avantageusement, la partie surmoulée de l'insert présente une forme choisie de manière à garantir un ancrage efficace dans la paroi du réservoir.

Ainsi, dans une réalisation particulière, la partie surmoulée de l'insert présente deux faces opposées convergeant vers l'extérieur du réservoir.

Dans une autre réalisation particulière, la partie surmoulée de l'insert présente une forme annulaire avec une surface radialement intérieure divergeant vers l'extérieur du réservoir.

Avantageusement, l'insert présente une forme annulaire interrompue, ce qui permet à la fois la fixation d'un élément rapporté et son immobilisation dans une position angulaire prédéterminée.

Une telle forme permet notamment d'immobiliser dans une position prédéterminée un élément rapporté comportant un embout apte à s'engager dans le passage formé par la partie interrompue de l'insert.

On peut maintenir l'insert dans l'enceinte lors de la formation de la paroi de , telle sorte que la surface extérieure du réservoir présente un renfoncement au niveau de l'insert. On évite ainsi la formation d'un bossage sur la paroi extérieure du réservoir, susceptible d'augmenter l'encombrement de celui-ci.

L'insert n'a toutefois pas à être réalisé dans un matériau imperméable aux hydrocarbures, puisqu'il se trouve protégé par la couche formant barrière.

Dans une réalisation particulière, l'insert est en polyoléfine, notamment en polyéthylène haute densité.

Dans une autre réalisation particulière, l'insert est en métal.

Après son surmoulage, l'insert est emprisonné dans la paroi du réservoir.

Dans une autre mise en oeuvre de l'invention, on réalise le relief en rapportant un organe de fixation sur la paroi du réservoir par soudage. Dans ce cas, l'élément rapporté peut comporter des pattes élastiquement déformables aptes à franchir par déformation élastique un bourrelet annulaire de l'organe de fixation.

Avantageusement, la paraison comporte au moins une couche de matière thermoplastique et une couche formant barrière vis-à-vis des hydrocarbures.

Dans une réalisation préférée, la paraison comporte deux couches de matière thermoplastique et, entre elles, une couche formant barrière vis-à-vis des hydrocarbures. Cette dernière est ainsi protégée des agressions mécaniques par les couches extérieures.

On peut soumettre le réservoir à un traitement destiné à former une barrière vis-à-vis des hydrocarbures, notamment un traitement par fluoration.

L'invention a encore pour objet un réservoir à carburant comportant une paroi en matière thermoplastique soufflée rotomoulée ou thermoformée surmoulée sur au moins un insert, la paroi enrobant l'insert définissant un relief permettant la fixation d'un élément rapporté sur le corps du réservoir, ledit relief comportant un logement apte à recevoir au moins une partie de l'élément rapporté.

D'autres caractéristiques et avantages de la présente invention apparaîtront à la lecture de la description détaillée qui va suivre, d'exemples de réalisation non limitatifs, et à l'examen du dessin annexé, sur lequel :
- la figure 1 est une vue schématique et partielle, en coupe, d'une paroi de réservoir incorporant un insert selon un premier exemple de mise en oeuvre de l'invention,
- la figure 2 est une vue schématique de face selon la flèche II de la figure 1,
- la figure 3 est une vue analogue à la figure 2 d'un deuxième exemple de mise en oeuvre de l'invention,
- les figures 4 et 5 représentent schématiquement deux étapes du soufflage d'une paroi de réservoir dans une enceinte où est placé un insert,
- les figures 6A et 6B sont deux vues schématiques, en perspective, d'un troisième exemple de mise en oeuvre de l'invention,
- la figure 7 est une vue schématique et partielle, en coupe, d'une paroi de réservoir incorporant un insert selon un quatrième exemple de mise en oeuvre de l'invention, et
- la figure 8 est une vue schématique et partielle, en coupe axiale, d'un organe de fixation selon l'invention, rapporté sur la paroi du réservoir et sur lequel est fixé un élément rapporté partiellement représenté.

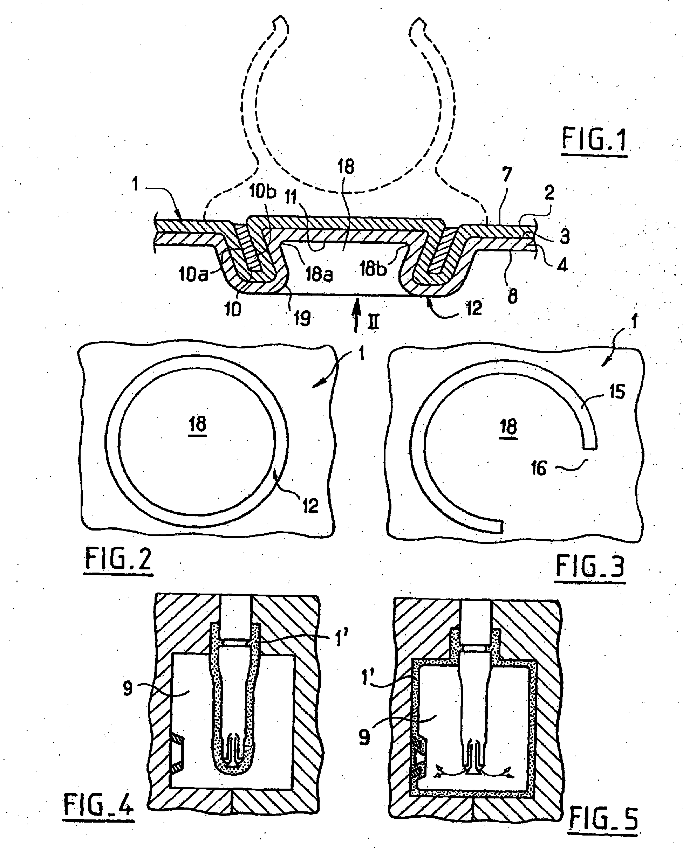

On a représenté partiellement, sur la figure 1, la paroi 1 du corps d'un réservoir à carburant de véhicule automobile.

Cette paroi 1 présente une structure multicouche, comportant successivement une couche extérieure 2, en polyéthylène dans l'exemple décrit, qui définit pratiquement l'ensemble de la face extérieure 7 du réservoir, une couche intermédiaire 3 formant barrière vis-à-vis des hydrocarbures, en EVOH dans l'exemple décrit, et une couche intérieure 4 en polyéthylène dans l'exemple décrit, définissant la face intérieure 8 du réservoir.

Dans l'exemple de réalisation décrit, la structure multicouche comporte entre chaque couche intérieure 4 ou extérieure 2 et la couche intermédiaire 3 une couche d'un adhésif destiné à améliorer la cohésion de l'ensemble.

Dans cet exemple de réalisation, un insert 10 de forme annulaire est intégré à la paroi 1 du réservoir.

L'insert 10 est destiné à la réalisation d'un moyen de fixation 12, définissant à l'intérieur du réservoir un logement 18 dont l'ouverture 19 présente un moindre diamètre que le fond 11.

Le logement 18 est destiné à recevoir un organe de fixation de type mâle, non représenté, capable de se déformer élastiquement pour franchir l'ouverture 19 avant de s'engager dans les gorges 18a et 18b formées entre l'ouverture 19 et le fond 11.

L'insert 10 présente une face radialement extérieure 10a qui est tronconique, convergeant en direction de l'intérieur du réservoir, et une face radialement intérieure 10b parallèle à cette dernière.

L'insert 10 se situe légèrement en retrait de la face extérieure 7 de la paroi 1, comme on peut le voir sur la figure 1.

La forme convergente de la face radialement intérieure 10b assure un ancrage efficace de l'insert 10 au sein de la paroi 1.

L'insert 10 constitue aussi une armature qui s'oppose à une variation des dimensions du logement 18, ce qui améliore la fiabilité de la fixation de l'élément rapporté introduit dans ce logement 18.

Dans l'exemple de réalisation des figures 1 et 2, l'insert 10 présente une forme annulaire continue.

Il peut être avantageux d'utiliser un insert présentant une forme annulaire interrompue, afin de constituer un moyen de fixation 15, tel que représenté sur la figure 3, présentant un passage 16 permettant d'indexer en rotation un élément rapporté mis en place dans le logement 18.

Autrement dit, on peut fixer à l'intérieur du réservoir l'élément rapporté avec une orientation angulaire prédéterminée.

On va maintenant décrire schématiquement, en référence aux figures 4 et 5, la manière dont l'insert 10 est intégré à la paroi 1 du réservoir.

Le corps du réservoir est réalisé par soufflage d'une paraison 1' introduite dans une enceinte 9, de manière connue en soi.

La paraison 1' présente la même structure multicouche que la paroi 1.

Comme illustré sur la figure 4, l'insert 10 est introduit dans l'enceinte 9 et maintenu contre la paroi de cette dernière avant le soufflage de la paraison 1', par des moyens de maintien non représentés.

Lors du soufflage de la paraison 1', la paroi 1 du réservoir se forme et vient se plaquer contre la paroi de l'enceinte 9, comme on peut le voir sur la figure 5.

La paroi 1 issue du soufflage se plaque contre l'insert 10 et en suit sensiblement le contour, pour conduire à la configuration représentée sur la figure 1.

On remarquera que durant le soufflage, l'intégrité de la couche intermédiaire 3 formant barrière est conservée.

L'insert n'est pas limité à une forme annulaire circulaire et peut présenter une forme annulaire non circulaire ou tout autre forme encore.

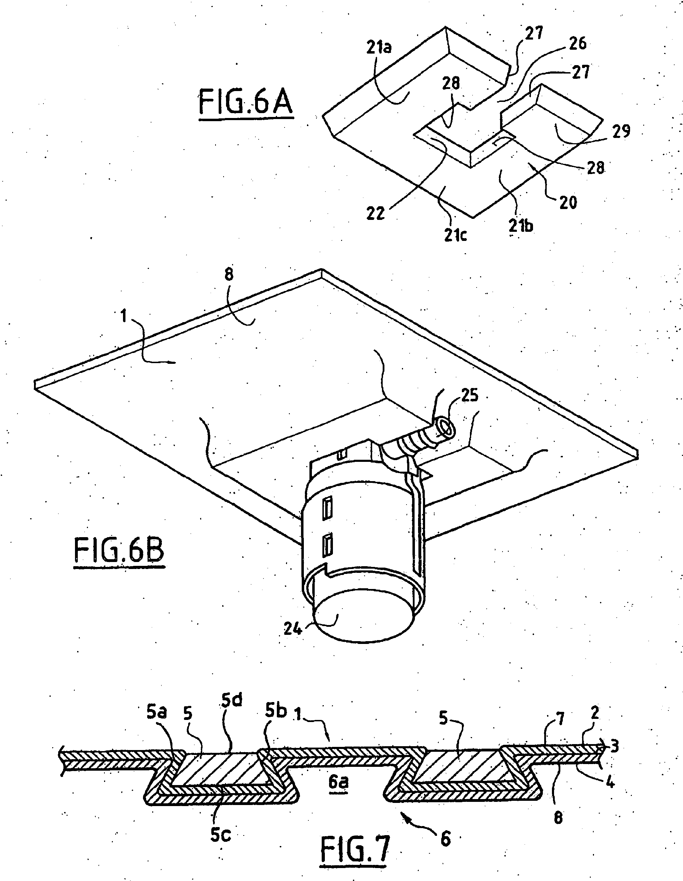

On a représenté sur la figure 6A un insert 20 présentant une forme générale en U, comportant deux branches rectilignes parallèles 21a et 21b dont les extrémités 27 sont coudées l'une en direction de l'autre.

La base 21c du U est perpendiculaire aux branches 21a et 21b.

Les extrémités 27 ménagent entre elles un passage 26.

Les faces en regard 28 des branches 21a et 21b convergent en éloignement de la face principale apparente 29 de l'insert 20.

L'insert 20 est biseauté à sa périphérie pour former une pente permettant, lorsque la paroi 1 du réservoir vient se plaquer sur l'insert 20 lors du soufflage, d'éviter de solliciter mécaniquement outre mesure avec un rayon de courbure trop faible les diverses couches constituant cette paroi.

On a représenté sur la figure 6b la paroi 1 une fois surmoulée sur l'insert 20.

L'espace compris au milieu de l'insert entre les branches 21a, 21b et 21c définit un logement dans lequel vient s'encliqueter un moyen de fixation d'un clapet 24 d'un système à carburant, la portion de paroi représentée étant en partie supérieure du réservoir.

Le clapet 24 comporte une tubulure 25 qui vient s'engager dans l'espace formée entre les extrémités 27.

De par sa forme, l'insert 20 constitue une armature qui tend à s'opposer à une variation dimensionnelle de la paroi 1 l'enrobant, ce qui diminue le risque d'un détachement accidentel du clapet 24.

Bien entendu, l'invention n'est pas limitée aux exemples de réalisation qui viennent d'être donnés.

On a représenté sur la figure 7 un moyen de fixation formant double plot, réalisé par surmoulage de deux inserts 5 disposés côte à côte.

Chaque insert 5 présente, dans le plan de coupe de la figure 7, une section transversale trapézoïdale, avec deux faces latérales opposées 5a et 5b qui correspondent aux petits côtés du trapèze et qui convergent vers l'extérieur du réservoir.

La face 5c correspondant au grand côté du trapèze est tournée vers l'intérieur du réservoir.

La face opposée 5d de l'insert 5 débouche à l'extérieur du réservoir.

On peut voir sur la figure 7 que la paroi 1 enrobe les faces 5a à 5c des inserts 5 et constitue un moyen de fixation 6.

Ce moyen de fixation 6 comporte un logement 6a défini par l'espace entre les deux inserts 5, destiné à recevoir une partie d'un élément rapporté.

En variante, on peut réaliser deux glissières de fixation disposées parallèlement et définissant entre elles un logement apte à recevoir une partie de l'élément rapporté.

La mise en place de l'élément rapporté peut alors être réalisée par coulissement suivant une direction parallèle aux glissières.

On peut encore utiliser un insert non seulement pour constituer un moyen d'accrochage à l'intérieur du réservoir mais également pour former un moyen d'accrochage à l'extérieur du réservoir.

A titre d'exemple, on a représenté, en pointillé sur la figure 1, une extension de l'insert 10 destinée à constituer un collier pour le maintien, sur la face extérieure du réservoir, d'une tubulure.

L'invention n'est pas limitée à la formation de la paroi du réservoir par soufflage.

On peut réaliser le réservoir par rotomoulage.

On peut encore réaliser le réservoir par thermoformage, par exemple formage par vide, avec deux demi-coquilles assemblées ensuite.

Les exemples de réalisation qui ont été décrits plus haut concernent la réalisation d'un moyen de fixation par surmoulage d'un insert.

On ne sort pas du cadre de la présente invention en réalisant un moyen de fixation en rapportant sur la paroi du réservoir un organe de fixation, lequel n'est alors pas enrobé par la paroi.

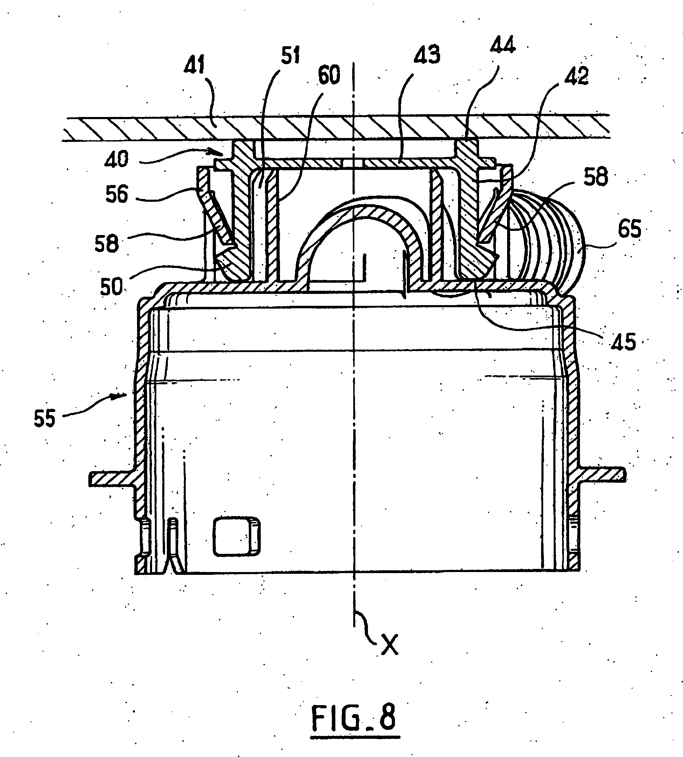

On a représenté en référence à la figure 8 un tel organe de fixation 40, fixé par soudage à la paroi du réservoir41.

Dans l'exemple décrit, la paroi 41 présente une structure monocouche réalisée en polyéthylène.

L'organe de fixation 40 comporte une paroi tubulaire de révolution 42, d'axe X et une paroi transversale 43, située à une distance relativement faible d'une extrémité axiale 44 de la paroi tubulaire 42.

L'organe de fixation 40 est soudé à la paroi de réservoir 41, par son extrémité supérieure 44.

La paroi tubulaire 42 présente à son extrémité inférieure 45 un bourrelet annulaire 50, dirigé radialement vers l'extérieur.

Les parois tubulaire 42 et transversale 43 définissent un logement 51 ouvert vers le bas permettant de recevoir la partie supérieure d'un élément rapporté 55 constitué, dans l'exemple décrit, par un clapet dont on a représenté que la jupe extérieure 56, d'axe X et des pattes élastiquement déformables 58. Ces dernières prennent appui sur le bourrelet 50.

Le clapet 55 comporte en outre une jupe intérieure 60, également d'axe X, engagée dans la paroi tubulaire 42 et prenant appui contre la paroi transversale 43.

Le clapet 55 est muni d'un embout de raccordement 65 s'étendant latéralement, traversant les jupes intérieure 60 et extérieure 56.

La mise en place du clapet 55 sur l'organe de sécurité 40 s'effectue par encliquetage suivant l'axe X, les pattes 58 franchissant par déformation élastique le bourrelet 50.

## Revendications

1. Procédé pour réaliser un réservoir en matière thermoplastique soufflée, thermoformée ou rotomoulée, ledit procédé comprenant les étapes suivantes :
- réaliser un relief du côté intérieur du réservoir, ce relief permettant la fixation d'un élément rapporté (24 ; 55) dans le réservoir et définissant un logement permettant de recevoir au moins une partie dudit élément, le relief étant réalisé par la mise en oeuvre des étapes suivantes :
a) placer dans une enceinte (9) au moins un insert (5 ; 10 ; 20),
b) introduire la matière destinée à former la paroi (1) du réservoir dans l'enceinte (9),
c) former la paroi du réservoir par soufflage, thermoformage ou rotomoulage, l'insert (5 ; 10 ; 20) étant positionné dans l'enceinte (9) de telle sorte que lors de sa formation, la paroi (1) enrobe au moins partiellement l'insert (5 ; 10 ; 20), ce dernier présentant en outre une forme choisie de manière à ce que cette paroi (1), en prenant au moins partiellement la forme de l'insert, constitue ledit relief,
d) fixer à l'intérieur du réservoir l'élément rapporté (24 ; 55) en le recevant au moins en partie dans le logement,
l'insert (5 ; 10 ; 20) étant réalisé dans un matériau ayant une température de fusion supérieure à celle du ou des matériaux constituant la paroi (1).

2. Procédé selon la revendication précédente, **caractérisé par le fait que** l'élément rapporté (24 ; 55) est constitué par un tuyau, un filtre, une pompe, une jaugé à carburant ou un organe de maintien.

3. Procédé selon la revendication 1, **caractérisé par le fait que** ledit élément rapporté est un clapet (55).

4. Procédé selon l'une quelconque des revendications précédentes, **caractérisé par le fait que** ledit relief est réalisé sur la paroi supérieure du réservoir.

5. Procédé selon l'une quelconque des revendications précédentes, ledit logement présentant un fond (11 ; 43), caractérisé pair le fait **que** l'élément rapporté vient au contact avec ledit fond après sa fixation.

6. Procédé selon l'une quelconque des revendications précédentes, **caractérisé par le fait que** ledit logement est défini à l'intérieur d'une paroi annulaire.

7. Procédé selon la revendication 6, **caractérisé par le fait que** ladite paroi est interrompue.

8. Procédé selon la revendication 6, **caractérisé par le fait que** ladite paroi est continue.

9. Procédé selon l'une quelconque des revendications 1 à 5, **caractérisé par le fait que** ledit relief présente une forme de double plot, ledit logement étant défini entre les plots.

10. Procédé selon l'une quelconque des revendications précédentes, **caractérisé par le fait que** l'élément rapporté est mis en place dans le logement suivant la direction axiale de celui-ci.

11. Procédé selon l'une quelconque des revendications précédentes, **caractérisé par le fait que** ledit relief présente une forme choisie pour permettre une fixation par encliquetage de l'élément rapporté.

12. Procédé selon l'une quelconque des revendications 1 à 10, **caractérisé par le fait que** ledit relief présente une forme choisie pour permettre une retenue par friction de l'élément rapporté sur la paroi du réservoir.

13. Procédé selon l'une quelconque des revendications précédentes, **caractérisé par le fait que** la paroi du réservoir est réalisée par soufflage d'une paraison placée dans l'enceinte.

14. Procédé selon l'une quelconque des revendications précédentes, **caractérisé par le fait que** l'étape b) précède l'étape a).

15. Procédé selon l'une quelconque des revendications précédentes, **caractérisé par le fait que** la forme de l'insert (5 ; 10 ; 20) est choisie de manière à constituer une armature au sein de la paroi (1) du réservoir, limitant les variations dimensionnelles de cette dernière.

16. Procédé selon l'une quelconque des revendications précédentes, **caractérisé par le fait que** la partie surmoulée de l'insert (5 ; 10 ; 20) présente une forme choisie de manière à garantir un ancrage efficace dans la paroi (1) du réservoir.

17. Procédé selon la revendication 16, **caractérisé par le fait que** le relief présente une forme annulaire avec une surface radialement intérieure (10b) divergeant vers l'extérieur du réservoir.

18. Procédé selon l'une quelconque des revendications précédentes, **caractérisé par le fait que** l'on maintient l'insert (5 ; 10 ; 20) dans l'enceinte (9) lors de la formation de la paroi de telle sorte que la surface extérieure du réservoir présente un renfoncement au niveau de l'insert (5 ; 10 ; 20).

19. Procédé selon l'une quelconque des revendications précédentes, **caractérisé par le fait que** insert (5 ; 10 ; 20) est en métal.

20. Procédé selon l'une quelconque des revendications précédentes, **caractérisé par le fait que** l'insert est emprisonné dans la paroi du réservoir, après son surmoulage.

21. Procédé selon l'une quelconque des revendications précédentes, **caractérisé par le fait que** la paroi (1) du réservoir comporte au moins une couche de matière thermoplastique (2 ; 4) et une couche (3) formant barrière vis-à-vis des hydrocarbures.

22. Procédé selon la revendication précédente, **caractérisé par le fait que** l'enveloppe comporte deux couches de matière thermoplastique (2 ; 4) et, entre elles, une couche (3) formant barrière vis-à-vis des hydrocarbures.

23. Procédé selon l'une quelconque des revendications précédentes, **caractérisé** l'on soumet la paroi du réservoir à un traitement destiné à former une barrière vis-à-vis des hydrocarbures, notamment un traitement par fluoration.

24. Système comprenant un réservoir à carburant et un élémént rapporté, ledit réservoir à carburant comportant une paroi (1) en matière thermoplastique soufflée, rotomoulée ou thermoformée surmoulée sur au moins un insert (5 ; 10 ; 20), la paroi enrobant l'insert définissant un relief permettant la fixation de l'element rapporté (24) sur le corps du réservoir, **caractérisé par le fait que** ledit relief comporte un logement recevant au moins une partie de l'élément rapporté, et dans lequel l'insert (5 ; 10 ; 20) est réalisé dans un matériau ayant une température de fusion supérieure à celle du ou des matériaux constituant la paroi (1).

## Patentansprüche

1. Verfahren zum Herstellen eines Tanks aus thermoplastischem Material, das blasgeformt, thermogeformt oder drehgeformt wird, wobei das Verfahren die folgenden Schritte umfasst:
- Realisieren einer Ausstülpung auf der Innenseite des Tanks, wobei diese Ausstülpung die Befestigung eines Ansatzelements (24; 55) in dem Tank ermöglicht und eine Aufnahme definiert, die das Aufnehmen wenigstens eines Teils des Elements ermöglicht, wobei die Ausstülpung durch die Durchführung der folgenden Schritte realisiert wird:
a) Platzieren wenigstens eines Einsatzes (5; 10; 20) in einem Raum (9),
b) Einführen des zur Bildung der Wand (1) des Tanks bestimmten Materials in den Raum (9),
c) Formen der Wand des Tanks durch Blasformen, Thermoformen oder Drehformen, wobei der Einsatz (5; 10; 20) in dem Raum (9) so positioniert wird, dass die Wand (1) während ihrer Formung den Einsatz (5; 10; 20) wenigstens teilweise umhüllt, wobei der Einsatz ferner eine Form aufweist, die so gewählt ist, dass diese Wand (1), indem sie wenigstens teilweise die Form des Einsatzes annimmt, die Ausstülpung bildet,
d) Befestigen des Ansatzelements (24; 55) im Inneren des Tanks, indem es wenigstens teilweise in der Aufnahme aufgenommen wird,
wobei der Einsatz (5; 10; 20) aus einem Material hergestellt ist, das eine Schmelztemperatur hat, die höher ist als die des Materials oder der Materialien, aus dem/denen die Wand (1) gebildet ist.

2. Verfahren nach dem vorhergehenden Anspruch, **dadurch gekennzeichnet, dass** das Ansatzelement (24; 55) von einem Rohr, einem Filter, einer Pumpe, einer Kraftstoffanzeige oder einem Halteorgan gebildet ist.

3. Verfahren nach Anspruch 1, **dadurch gekennzeichnet, dass** das Ansatzelement ein Ventil (55) ist.

4. Verfahren nach einem der vorhergehenden Ansprüche, **dadurch gekennzeichnet, dass** die Ausstülpung an der oberen Wand des Tanks realisiert wird.

5. Verfahren nach einem der vorhergehenden Ansprüche, wobei die Aufnahme einen Boden (11; 43) aufweist, **dadurch gekennzeichnet, dass** das Ansatzelement nach seiner Befestigung mit dem Boden in Kontakt kommt.

6. Verfahren nach einem der vorhergehenden Ansprüche, **dadurch gekennzeichnet, dass** die Aufnahme im Inneren einer ringförmigen Wand definiert ist.

7. Verfahren nach Anspruch 6, **dadurch gekennzeichnet, dass** die Wand unterbrochen ist.

8. Verfahren nach Anspruch 6, **dadurch gekennzeichnet, dass** die Wand durchgehend ist.

9. Verfahren nach einem der Ansprüche 1 bis 5, **dadurch gekennzeichnet, dass** die Ausstülpung die Form eines doppelten Stiftes aufweist, wobei die Aufnahme zwischen den Stiften definiert ist.

10. Verfahren nach einem der vorhergehenden Ansprüche, **dadurch gekennzeichnet, dass** das Ansatzelement in der Aufnahme in deren axialer Richtung angeordnet wird.

11. Verfahren nach einem der vorhergehenden Ansprüche, **dadurch gekennzeichnet, dass** die Ausstülpung eine Form aufweist, die gewählt ist, um eine Befestigung des Ansatzelements durch Einrasten zu ermöglichen.

12. Verfahren nach einem der Ansprüche 1 bis 10, **dadurch gekennzeichnet, dass** die Ausstülpung eine Form aufweist, die gewählt ist, um einen Rückhalt des Ansatzelements an der Wand des Tanks durch Reibung zu ermöglichen.

13. Verfahren nach einem der vorhergehenden Ansprüche, **dadurch gekennzeichnet, dass** die Wand des Tanks durch Formblasen eines Vorformlings hergestellt wird, der in dem Raum platziert wird.

14. Verfahren nach einem der vorhergehenden Ansprüche, **dadurch gekennzeichnet, dass** Schritt b) Schritt a) vorangeht.

15. Verfahren nach einem der vorhergehenden Ansprüche, **dadurch gekennzeichnet, dass** die Form des Einsatzes (5; 10; 20) so gewählt ist, dass er eine Bewehrung im Inneren der Wand (1) des Tanks bildet und die Dimensionsveränderungen des Tanks einschränkt.

16. Verfahren nach einem der vorhergehenden Ansprüche, **dadurch gekennzeichnet, dass** der angeformte Teil des Einsatzes (5; 10; 20) eine Form aufweist, die so gewählt ist, dass sie eine wirksame Verankerung in der Wand (1) des Tanks sicherstellt.

17. Verfahren nach Anspruch 16, **dadurch gekennzeichnet, dass** die Ausstülpung eine Ringform aufweist mit einer radial inneren Fläche (10b), die nach außerhalb des Tanks divergiert.

18. Verfahren nach einem der vorhergehenden Ansprüche, **dadurch gekennzeichnet, dass** der Einsatz (5; 10; 20) in dem Raum (9) während der Formung der Wand so gehalten wird, dass die äußere Fläche des Tanks im Bereich des Einsatzes (5; 10; 20) eine Vertiefung aufweist.

19. Verfahren nach einem der vorhergehenden Ansprüche, **dadurch gekennzeichnet, dass** der Einsatz (5; 10; 20) aus Metall ist.

20. Verfahren nach einem der vorhergehenden Ansprüche, **dadurch gekennzeichnet, dass** der Einsatz nach seiner Anformung in der Wand des Tanks eingeschlossen ist.

21. Verfahren nach einem der vorhergehenden Ansprüche, **dadurch gekennzeichnet, dass** die Wand (1) des Tanks wenigstens eine Schicht aus thermoplastischem Material (2; 4) und eine Schicht (3) aufweist, die eine Sperrschicht gegenüber Kohlenwasserstoffen bildet.

22. Verfahren nach dem vorhergehenden Anspruch, **dadurch gekennzeichnet, dass** die Umhüllung zwei Schichten aus thermoplastischem Material (2; 4) aufweist und zwischen ihnen eine Schicht (3) aufweist, die eine Sperrschicht gegenüber Kohlenwasserstoffen bildet.

23. Verfahren nach einem der vorhergehenden Ansprüche, **dadurch gekennzeichnet, dass** die Wand des Tank einer Behandlung zur Bildung einer Sperrschicht gegenüber Kohlenwasserstoffen unterzogen wird, insbesondere einer Behandlung durch Fluorierung.

24. System, das einen Kraftstofftank und ein Ansatzelement umfasst, wobei der Kraftstofftank eine Wand (1) aus thermoplastischem, blasgeformtem, thermogeformtem oder drehgeformtem Material aufweist, das auf wenigstens einem Einsatz (5; 10; 20) angeformt ist, wobei die Wand, die den Einsatz umhüllt, eine Ausstülpung definiert, die die Befestigung eines Ansatzelements (24) an dem Körper des Tanks ermöglicht, **dadurch gekennzeichnet, dass** die Ausstülpung eine Aufnahme zum Aufnehmen wenigstens eines Teils des Ansatzelements aufweist, und wobei der Einsatz (5; 10; 20) aus einem Material hergestellt ist, das eine Schmelztemperatur hat, die höher ist als die des Materials oder der Materialien, aus dem/denen die Wand (1) gebildet ist.

## Claims

1. Method of producing a tank from blown, heat formed or rotationally moulded thermoplastic material, said method comprising the following steps:
- creating a relief on the inside of the tank, this relief enabling a detachable element (24; 55) to be secured in the tank and defining a housing enabling at least a part of said element to be accommodated, the relief being created by implementing the following steps:
a) placing at least one insert (5; 10; 20) in an enclosure (9),
b) introducing the material that is to form the wall (1) of the tank into the enclosure (9),
c) forming the wall of the tank by blowing, thermoforming or rotational moulding, the insert (5; 10; 20) being positioned in the enclosure (9) so that whilst the wall (1) is being formed, it at least partially covers the insert (5; 10; 20), the latter also having a shape selected so that this wall (1), having at least partially assumed the shape of the insert, constitutes said relief,
d) securing the detachable element (24; 55) inside the tank, accommodating it at least partially in the housing,
the insert (5; 10; 20) being made from a material having a melting temperature higher than that of the materials constituting the wall (1).

2. Method as claimed in the preceding claim, **characterised in that** the detachable element (24; 55) is a pipe, a filter, a pump, a fuel gauge or a retaining member.

3. Method as claimed in claim 1, **characterised in that** said detachable element is a valve (55).

4. Method as claimed in any one of the preceding claims, **characterised in that** said relief is created on the top wall of the tank.

5. Method as claimed in any one of the preceding claims, said housing having a base (11; 43), **characterised in that** the detachable element comes into contact with said base once it has been secured.

6. Method as claimed in any one of the preceding claims, **characterised in that** said housing is defined on the inside of an annular wall.

7. Method as claimed in claim 6, **characterised in that** said wall is interrupted.

8. Method as claimed in claim 6, **characterised in that** said wall is continuous.

9. Method as claimed in any one of claims 1 to 5, **characterised in that** said relief has a shape with two blocks, said housing being defined between the blocks.

10. Method as claimed in any one of the preceding claims, **characterised in that** the detachable element is placed in the housing in the axial direction thereof.

11. Method as claimed in any one of the preceding claims, **characterised in that** said relief has a shape selected so as to enable the detachable element to be secured by a snap-fit arrangement.

12. Method as claimed in any one of claims 1 to 10, **characterised in that** said relief has a shape selected so as to enable the detachable element to be secured on the wall of the tank by friction.

13. Method as claimed in any one of the preceding claims, **characterised in that** the wall of the tank is made by blowing a parison placed in the enclosure.

14. Method as claimed in any one of the preceding claims, **characterised in that** step b) precedes step a).

15. Method as claimed in any one of the preceding claims, **characterised in that** the shape of the insert (5; 10; 20) is selected so as to constitute a reinforcement within the wall (1) of the tank, thereby limiting the dimensional variations of the latter.

16. Method as claimed in any one of the preceding claims, **characterised in that** the overmoulded part of the insert (5; 10; 20) has a shape selected so as to guarantee efficient anchoring in the wall (1) of the tank.

17. Method as claimed in claim 16, **characterised in that** the relief has an annular shape with a radially inner surface (10b) diverging towards the exterior of the tank.

18. Method as claimed in any one of the preceding claims, **characterised in that** the insert (5; 10; 20) is held in the enclosure (9) in such a way when the wall is being formed that the external surface of the tank has an indent on a level with the insert (5; 10; 20).

19. Method as claimed in any one of the preceding claims, **characterised in that** the insert (5; 10; 20) is made from metal.

20. Method as claimed in any one of the preceding claims, **characterised in that** the insert is trapped in the wall of the tank after it has been overmoulded.

21. Method as claimed in any one of the preceding claims, **characterised in that** the wall (1) of the tank comprises at least one layer of thermoplastic material (2; 4) and a layer (4) forming a barrier against hydrocarbons.

22. Method as claimed in the preceding claim, **characterised in that** the sandwich arrangement comprises two layers of thermoplastic material (2; 4) and a layer (3) forming a barrier against hydrocarbons disposed between them.

23. Method as claimed in any one of the preceding claims, **characterised in that** the wall of the tank is subjected to a treatment with a view to forming a barrier against hydrocarbons, in particular a treatment by fluorination.

24. System comprising a fuel tank and a detachable element, said fuel tank comprising a wall (1) made from blown, rotationally moulded or thermoformed thermoplastic material overmoulded onto at least one insert (5; 10; 20), the wall encasing the insert defining a relief enabling the detachable element (24) to be secured to the body of the tank, **characterised in that** said relief comprises a housing accommodating at least a part of the detachable element and **in that** the insert (5; 10; 20) is made from a material having a melting temperature higher than that of the material or materials constituting the wall (1).
